# EUROPÄISCHE PATENTANMELDUNG

(11) **EP 2 740 990 A2**
(43) Veröffentlichungstag der Anmeldung: **11.06.2014**
(21) Anmeldenummer: 13188494.2
(22) Anmeldetag: 14.10.2013
(51) Int. Cl.: F21S 8/10, F21V 19/00

(54) **Vorrichtung zum Festlegen einer Lampe**

(30) Priorität: 10.12.2012 AT 12832012
(71) Anmelder: Zizala Lichtsysteme GmbH, 3250 Wieselburg (AT)
(72) Erfinder: Hauer, Clemens, 3261 Steinakirchen am Forst (AT); Mitterlehner, Stephan, 3240 Mank (AT); Sieber, Lukas, 3380 Pöchlarn (AT)
(74) Vertreter: Patentanwaltskanzlei Matschnig & Forsthuber OG

(57) **Zusammenfassung**

Bei einer Vorrichtung zum Festlegen einer Lampe (1) an einem offenen Reflektorhals (5) eines Reflektors (27) eines Fahrzeugscheinwerfers weist die Vorrichtung ein am Reflektorhals (5) quer zu einer optischen Achse (Z) des Reflektors verschieblich festgelegtes Verriegelungsteil (8) auf, das bei einem Verdrehen der Lampe (1) im Reflektorhals (5) vermittels eines Steuerteils (17) im Sinne einer translatorischen Bewegung relativ zum Reflektorhals (5) verschiebbar und mit zumindest einem Verriegelungsbereich der Lampe (1) in Eingriff bringbar ist.

## Beschreibung

Die Erfindung betrifft eine Vorrichtung zum Festlegen einer Lampe an einem offenen Reflektorhals eines Reflektors eines Fahrzeugscheinwerfers.

Bei der Festlegung von Leuchtmitteln an Fahrzeugscheinwerfern sind eine Reihe von Anforderungen faktischer und gesetzlicher Natur zu erfüllen. Zum Einen ist aufgrund der Vibrationen während der Fahrt eine besonders feste und zuverlässige Verbindung mit dem Reflektor des Scheinwerfers erforderlich. Zum Anderen soll es möglich sein, eine Lampe möglichst schnell und einfach, insbesondere ohne die Verwendung von Werkzeug auszuwechseln. Die bisher bekannten Lösungen hierzu erfüllen diese Anforderungen bei relativ hohem baulichen Aufwand nur unzufriedenstellend.

Beispielsweise ist in der DE 10 2007 022 028 A1 eine Beleuchtungseinrichtung für einen Kraftfahrzeugscheinwerfer offenbart, bei der über eine Reihe von Adapterteilen und insbesondere einem in diese Adapterteile eingesetzten Klemmelement eine Verdrehung der Lampe beim Einsetzen in den Reflektorhals in eine translatorische Bewegung der Lampe umgesetzt wird, wodurch die Lampe mit dem Reflektorhals in Eingriff gebracht wird. Der Aufbau gemäß der DE 10 2007 022 028 A1 ist relativ komplex und eignet sich nicht besonders gut für einen einfachen Lampenwechsel da das für die Umsetzung der Drehbewegung in die translatorische Bewegung verantwortliche Klemmelement nur unzureichend gegen Herausfallen gesichert ist.

Es ist daher Aufgabe der vorliegenden Erfindung, eine möglichst stabile und gleichzeitig anwenderfreundliche Vorrichtung zum Festlegen einer Lampe an einem Reflektorhals eines Fahrzeugscheinwerfers zu schaffen, die eine geringe Zahl von Einzelteilen aufweist. Weiters soll der Lampenwechsel ohne die Zuhilfenahme von Werkzeug durch Verdrehen der Lampe im Reflektorhals möglich sein.

Die Aufgabe wird ausgehend von einer Vorrichtung der eingangs genannten Art erfindungsgemäß dadurch gelöst, dass die Vorrichtung ein am Reflektorhals quer zu einer optischen Achse des Reflektors verschieblich festgelegtes Verriegelungsteil aufweist, das bei einem Verdrehen der Lampe im Reflektorhals vermittels eines Steuerteils im Sinne einer translatorischen Bewegung relativ zum Reflektorhals verschiebbar und mit zumindest einem Verriegelungsbereich der Lampe in Eingriff bringbar ist. Die Wirkung des Steuerteils beruht darauf, dass die Lampen, die im modernen Fahrzeugbau zum Einsatz kommen, beispielsweise Xenon-Gasentladungslampen, im Bereich der Fassung Ausnehmungen aufweisen, die einer eindeutigen Zuweisung der einzelnen Lampentypen zu den entsprechenden Reflektoren im Sinne einer Codierung dienen. Eine solche Ausnehmung dient nun im Zusammenhang mit der vorliegenden Erfindung zusätzlich dazu, mit dem Steuerteil beim Verdrehen zusammenzuwirken, um die Verschiebung des Verriegelungsteil zu bewirken. Dem Fachmann wird klar sein, dass die Erfindung jedoch nicht auf Xenon-Gasentladungslampen mit den beschriebenen Ausnehmungen beschränkt ist, sondern dass vielmehr jede Art von Lampe, die im Bereich der Fassung über Bereiche mit Unstetigkeiten oder von einer Rotationssymmetrie abweichende Bereiche verfügt, mit einem entsprechenden Steuerteil zur Umsetzung einer Drehbewegung der Lampe in eine translatorische Bewegung des Verriegelungsteils zusammenwirken kann. Im Gegensatz zum beschriebenen Stand der Technik wird bei der vorliegenden Erfindung durch die Drehbewegung der Lampe beim Einsetzen und Verriegeln nicht die Lampe selbst, sondern das Verriegelungsteil im Sinne einer translatorischen Bewegung verschoben und mit einem Verriegelungsbereich der Lampe in Eingriff gebracht. Vorteilhaft hierbei ist, dass prinzipiell mit nur zwei funktionellen Teilen, dem Verriegelungsteil und dem Steuerteil das Auslangen gefunden werden kann und dennoch eine stabile und trotzdem leicht lösbare Verbindung der Lampe mit dem Reflektor erzielt wird. Weiters ist es vorteilhaft, dass die Führung der Lampe im Reflektorhals enger ausgeführt sein kann, als das beim Stand der Technik aufgrund der translatorischen Bewegung der Lampe im Reflektorhals möglich ist, wodurch die erfindungsgemäße Vorrichtung eine solidere Festlegung gestattet. Im Sinne der vorliegenden Erfindung bezeichnet der Begriff "Reflektorhals" den Endbereich des Reflektors, an dem die Teile der erfindungsgemäßen Vorrichtung festgelegt sind.

Bei der Neuproduktion von Fahrzeugscheinwerfern mit der erfindungsgemäßen Vorrichtung kann der Reflektorhals des Reflektors entsprechend ausgestaltet werden, damit ein Verriegelungsteil gemäß der vorliegenden Erfindung verschieblich festgelegt werden kann. Damit die erfindungsgemäße Vorrichtung jedoch auch bei nicht speziell geformten Reflektoren eingesetzt werden kann, ist die erfindungsgemäße Vorrichtung bevorzugt dahingehend weitergebildet, dass das Verriegelungsteil unter Zwischenschaltung eines Adapterteils am Reflektorhals festgelegt ist.

Gemäß einer bevorzugten Ausführungsform der vorliegenden Erfindung ist das Steuerteil als vom Adapterteil am Reflektorhals gehaltener Ring ausgebildet, mit einer am Aussenumfang des Rings gelegenen Steuernase und einem am Innenumfang des Rings gelegenen, mit der Lampe in Eingriff bringbaren Mitnehmer. Dadurch, dass das Steuerteil im Wesentlichen ringförmig ausgebildet ist, wird die Drehbewegung der Lampe im Reflektorhals beim Einsetzen optimal unterstützt, während der Mitnehmer beispielsweise in eine wie oben beschriebene Ausnehmung im Bereich der Fassung der Lampe eingreifen kann. Durch den Mitnehmer wird die Drehbewegung der Lampe auf den Ring übertragen und die Steuernase drückt beim Verdrehen das Verriegelungsteil in eine Richtung quer zur optischen Achse des Reflektors.

Gemäß einer alternativen bevorzugten Ausführungsform der vorliegenden Erfindung kann die Vorrichtung hinsichtlich des Steuerteils jedoch auch dahingehend weitergebildet sein, dass das Steuerteil am Verriegelungsteil angeordnet und einstückig mit diesem ausgebildet ist. In diesem Fall drückt eine Ausnehmung im Bereich der Fassung der Lampe direkt auf eine Steuerfläche am Verriegelungsteil. Bei dieser Ausgestaltung der erfindungsgemäßen Vorrichtung können bei entsprechender Festlegung des Steuerteils am Reflektorhals, insbesondere durch eine Rastverbindung zwischen dem Verriegelungsteil und dem Reflektorhals, die Einzelteile praktisch nicht mehr verloren gehen, wenn die Lampe gewechselt werden muss.

Bei der erfindungsgemäßen Vorrichtung erfolgt die Festlegung, wie bereits ausführlich erläutert, durch Verschieben eines Verriegelungsteils am Reflektorhals, sodass das Verriegelungsteil einen bestimmten Bereich der Lampe, der im Rahmen der vorliegenden Erfindung als Verriegelungsbereich definiert ist, hintergreift bzw. mit diesem formschlüssig zusammenwirkt. Durch die Verschiebung des Verriegelungsteils erfolgt der Formschluss jedoch nur an einer Seite der Lampe. Bevorzugt ist die Erfindung daher dergestalt weitergebildet, dass die Vorrichtung ein bezüglich des Reflektorhalses feststehendes Halteteil aufweist, das beim Verdrehen der Lampe mit dieser in Eingriff bringbar ist. Das Halteteil kann demgemäß als Lasche ausgebildet sein, die in die Öffnung des Reflektorhalses ragt, und beim Einsetzen der Lampe beispielsweise mit der oben genannten Ausnehmung für die Codierung in Deckung bringbar ist. Bei einem Verdrehen der Lampe gerät das Halteteil mit einem umlaufenden Ring an der Fassung der Lampe in Eingriff und stellt somit eine zusätzliche Sicherung der Lampe am Reflektorhals zur Verfügung.

Bevorzugt ist das Halteteil einstückig mit dem Verriegelungsteil ausgebildet und gegen den Reflektorhals abgestützt. In diesem Fall muss eine flexible Verbindung zu dem Halteteil bestehen, was beispielsweise durch eine einfache Drahtlasche gewährleistet ist. Beim Verschieben des Verriegelungsteils kann sich diese Drahtlasche verformen, wobei sich das Halteteil am Reflektorhals abstützt und dadurch bezüglich des Reflektorhalses ortsfest bleibt.

Gemäß einer bevorzugten Ausführungsform der vorliegenden Erfindung kann es vorgesehen sein, dass das Halteteil einstückig mit dem Adapterteil ausgebildet ist. In diesem Fall bildet das Halteteil einen geeignet ausgeformten Vorsprung am Adapterteil, der beim Verdrehen der Lampe beim Einsetzen dieselbe hintergreift. Bei dieser bevorzugten Ausführungsform kann das Verriegelungsteil einfacher ausgestaltet sein.

Damit beim Lösen der Lampe, was durch Verdrehen in die gegenüber dem Verdrehen beim Einsetzen entgegengesetzte Richtung erfolgt, das Verriegelungsteil die Lampe zuverlässig freigibt, ist die erfindungsgemäße Vorrichtung bevorzugt dahingehend weitergebildet, dass das Verriegelungsteil Rückstellmittel aufweist, die federnd am Reflektorhals bzw. am Adapterteil abgestützt sind. Die federnd am Reflektorhals abgestützten Rückstellmittel sind in der Verriegelungsstellung des Verriegelungsteils unter Spannung, sodass beim Lösen der Lampe das Verriegelungsteil wieder in die Ausgangslage gedrückt wird, in der das Verriegelungsteil mit dem Verriegelungsbereich der Lampe nicht mehr in Eingriff steht und die Lampe entnommen werden kann.

Wie bereits erwähnt, findet die vorliegende Erfindung insbesondere zur Festlegung von Xenon-Gasentladungslampen Verwendung. Diese Lampen weisen neben dem eigentlichen Leuchtmittel einen Starter auf, der zur Ionisierung des Gases im Kolben des Leuchtmittels eine sehr hohe Anfangsspannung zur Verfügung stellt. Solche Lampen müssen elektrisch abgeschirmt sein, da bei ihrem Betrieb starke elektromagnetische Felder entstehen, die auf die Elektronik des Fahrzeugs negative Einflüsse haben können. Die erfindungsgemäße Vorrichtung ist daher bevorzugt dahingehend weitergebildet, dass das Verriegelungsteil aus einem elektrisch leitenden Material gefertigt ist und zur elektrischen Kontaktierung der Lampe ausgeformt ist. Auf diese Weise erfolgt die EMV-Abschirmung der Lampe durch die erfindungsgemäße Vorrichtung zu ihrer Festlegung am Reflektor, wodurch eine weitere Integration der Funktionalitäten erreicht wird.

Die Erfindung wird nachfolgend anhand eines in der Zeichnung schematisch dargestellten Ausführungsbeispiels näher erläutert. In dieser zeigen
Die Fig. 1a und 1b perspektivische Darstellungen einer erfindungsgemäßen Vorrichtung zum Festlegen einer Lampe in einem nicht zusammengesetzten Zustand,
die Fig. 2a und 3a perspektivische Darstellungen der erfindungsgemäßen Vorrichtung in zusammengesetztem Zustand vor und nach dem Verdrehen der Lampe,
die Fig. 2b und 3b die Zustände gemäß den Fig. 2a und 3a aus einem anderen Blickwinkel,
die Fig. 4a und 4b Draufsichten auf die erfindungsgemäße Vorrichtung teilweise im Schnitt,
die Fig. 5a und 5b weitere Draufsichten auf die erfindungsgemäße Vorrichtung teilweise im Schnitt,
die Fig. 6a und 6b ungeschnittene Draufsichten auf die erfindungsgemäße Vorrichtung,
die Fig. 7a und 7b Seitenansichten der erfindungsgemäßen Vorrichtung teilweise im Schnitt,
die Fig. 8a und 8b perspektivische Darstellungen des Bereichs des Halteteils und des Steuerteils teilweise im Schnitt,
die Fig. 9a und 9b das Zusammenspiel der Ausnehmung an der Lampe mit dem Steuerteil und die Wirkung des Halteteils in einer perspektivischen Ansicht teilweise im Schnitt,
die Fig. 10 eine perspektivische Darstellung der Einzelteile der erfindungsgemäßen Vorrichtung gemäß einer bevorzugten Variante,
die Fig. 11a und 11b eine Draufsicht auf die erfindungsgemäße Variante gemäß Fig. 10,
die Fig. 12a und 12b perspektivische Darstellungen der erfindungsgemäßen Variante in zusammengesetztem Zustand,
die Fig. 13 und 13b perspektivische Darstellungen der erfindungsgemäßen Variante teilweise im Schnitt und
die Fig. 14a und 14b perspektivische Darstellungen einer erfindungsgemäßen Vorrichtung zum Festlegen einer Lampe mit einem Adapterteil.

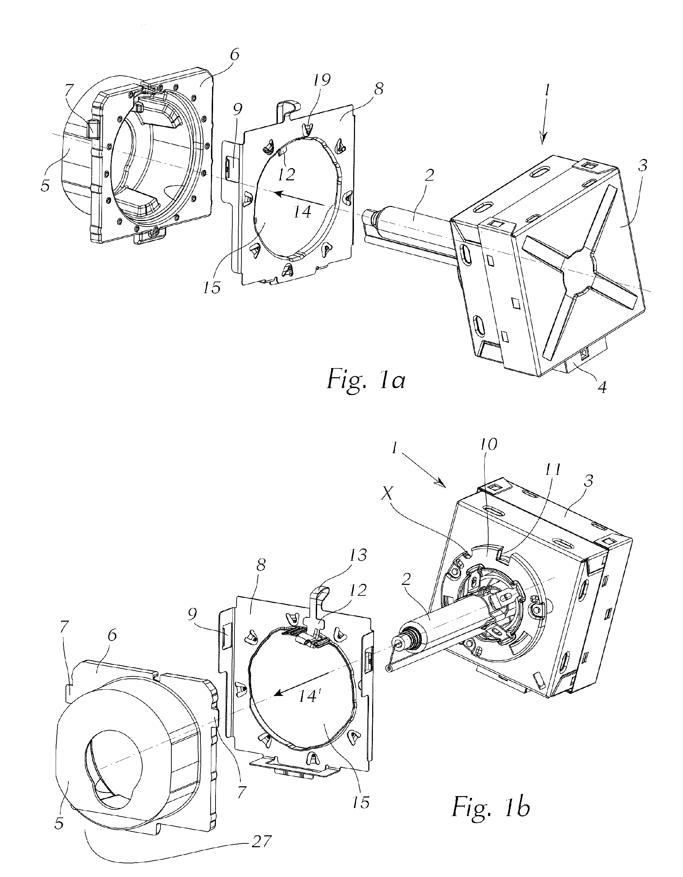

In Fig. 1a ist eine Lampe für einen Fahrzeugscheinwerfer mit 1 bezeichnet, wobei die Lampe 1 aus einem Kolben 2, der beispielsweise Xenongas enthält, und einem Starter 3 besteht, der über einen Anschluss 4 mit der Elektrik eines Fahrzeugs verbunden wird. Der Starter 3 stellt für die anfängliche Ionisierung des Xenongases eine sehr hohe Anfangsspannung zur Verfügung und regelt die kontinuierliche Leistungszufuhr zum Kolben 2 während des Dauerbetriebs der Lampe 1. Mit 5 ist ein Reflektorhals eines in der Darstellung gemäß Fig. 1 nicht dargestellten Reflektors eines Fahrzeugscheinwerfers bezeichnet, der einen speziell ausgeformten Flansch 6 mit Festlegungselementen, beispielsweise in Form von Rastnasen 7, aufweist. Das Verriegelungsteil ist mit 8 bezeichnet und weist entsprechende Ausnehmungen 9 zur Festlegung des Verriegelungsteils 8 am Reflektorhals 5 vermittels der Rastnasen 7 auf. Mit 19 sind Kontaktlaschen bezeichnet, die eine elektrische Kontaktierung zum Starter 3 der Lampe 1 herstellen, um die genannte EMV-Abschirmung zu ermöglichen.

Dieselben Teile wie in Fig. 1a sind in der Fig. 1b dargestellt. Aus diesem Blickwinkel ist zu erkennen, dass die Lampe 1 an der dem Verriegelungsteil 8 bzw. dem Flansch 6 zugewandten Teil des Starters 3 eine Fassung 10 für den Kolben 2 aufweist. Mit 11 ist eine Ausnehmung an der Fassung 10 bezeichnet, die einer Zuordnung der Lampe 1 zu einem speziellen Reflektor im Sinne einer Codierung dient. In den Fig. 1a und 1b ist ein Halteteil 12 zu erkennen, welches einstückig mit dem Verriegelungsteil 8 ausgebildet ist und insbesondere über eine Drahtlasche 13 mit diesem verbunden ist.

Aus den Fig. 1a und 1b ist ersichtlich, dass das Verriegelungsteil 8 über die Ausnehmungen 9 auf die Rastnasen 7 des Flansches 6 des Reflektorhalses 5 aufgesetzt und mit diesen in Eingriff gebracht werden kann, wodurch gemäß dieser Variante der vorliegenden Erfindung die Vorrichtung zum Festlegen einer Lampe 1 an einem offenen Reflektorhals 5 eines Reflektors eines Fahrzeugscheinwerfers hergestellt wird. Zum Festlegen der Lampe 1 wird die Lampe in Richtung des Pfeils 14 bzw. 14' in den Reflektorhals 5 eingesetzt, wobei die Lampe 1 wegen der Ausnehmung 11 an der Fassung 10 und wegen des Halteteils 12, welches in die Öffnung 15 des Verriegelungsteils 8 ragt, nur in einem Verdrehwinkel eingesetzt werden kann, bei dem das Halteteil 12 und die Ausnehmung 11 miteinander in Deckung sind.

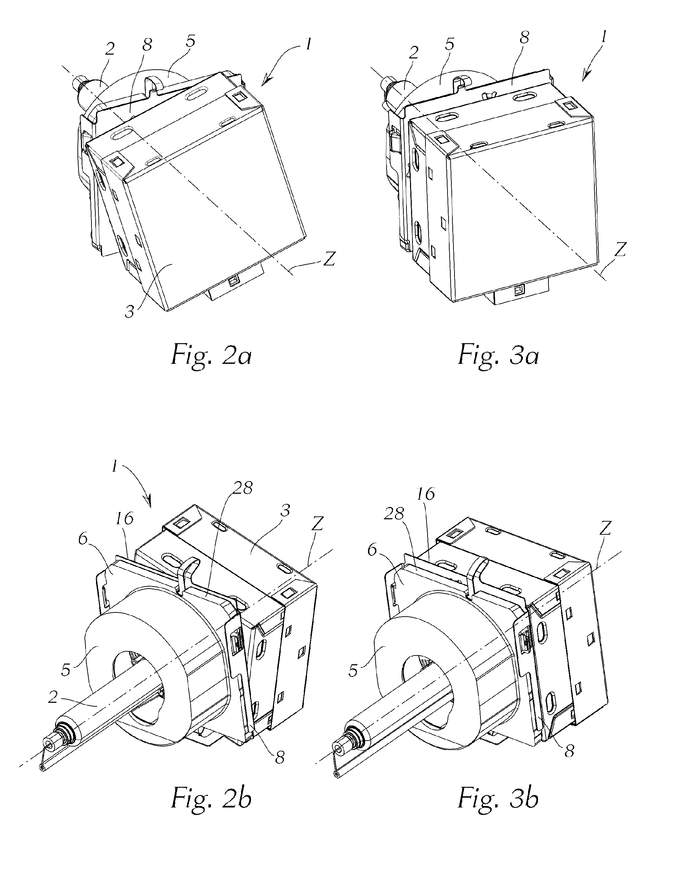

Nach dem Einsetzen der Lampe 1 entlang des Pfeils 14 bzw. 14' wird ein Zustand erhalten, wie er in der Fig. 2a dargestellt ist. Die Lampe 1 liegt mit dem Starter 3 bzw. der Fassung 10, was in Fig. 2a nicht zu erkennen ist, am Verriegelungsteil 8 auf, so dass der Kolben 2 in den offenen Reflektorhals 5 ragt. Der Zustand aus Fig. 2a ist aus einem anderen Blickwinkel in Fig. 2b dargestellt.

In den Fig. 3a und 3b ist nun zu erkennen, dass im eingesetzten Zustand der Lampe 1 ein Verdrehen der Lampe in der Öffnung des Verriegelungsteils 8 erfolgen kann, wodurch vermittels der Wirkung des bisher noch nicht näher beschriebenen Steuerteils eine Verschiebung des Verriegelungsteils 8 im Sinne einer translatorischen Bewegung relativ zum Reflektorhals 5 erfolgt, wodurch die Lampe 1 im Reflektorhals 5 verriegelt wird. Die Verschiebung des Verriegelungsteils 8 relativ zum Reflektorhals 5 und insbesondere quer zur optischen Achse Z des Reflektors ist in den Fig. 2a und 3a ansatzweise und besonders deutlich in den Fig. 2b und 3b zu erkennen. Insbesondere lässt sich aus den Fig. 2b und 3b ersehen, dass die Oberkante 16 des Verriegelungsteils 8 in Fig. 3b gegenüber dem Zustand in Fig. 2b deutlich über den oberen Rand 28 des Flansches 6 des Reflektorhalses 5 herausragt, so dass es offensichtlich ist, dass es zu einer Verschiebung des Verriegelungsteils 8 quer zur optischen Achse Z gekommen ist.

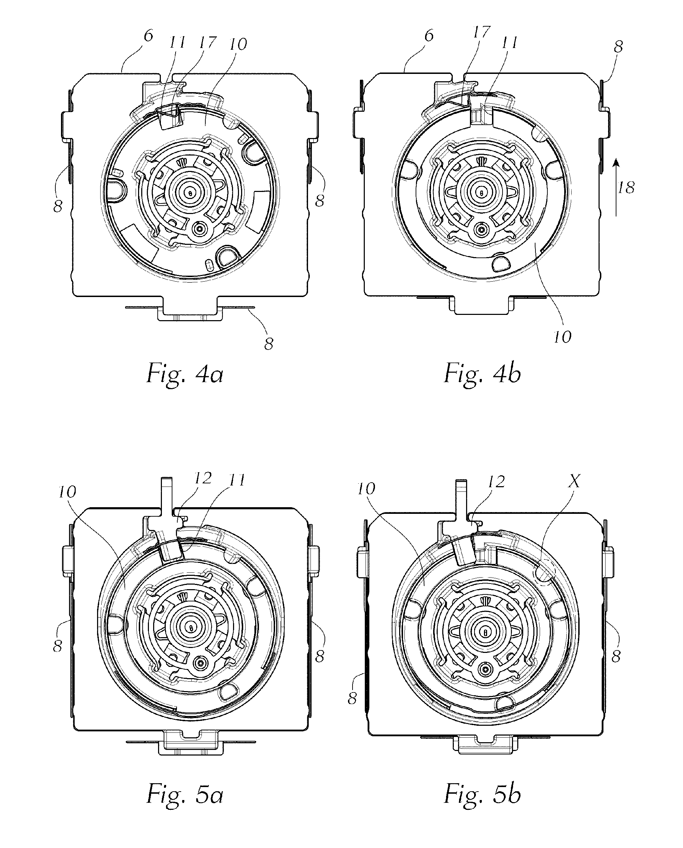

In den Draufsichten gemäß der Fig. 4a und 4b ist die erfindungsgemäße Vorrichtung mit eingesetzter Lampe 1 ersichtlich, wobei der Starter 3 der Lampe 1 weggeschnitten ist, um das Zusammenwirken der funktionellen Teile des Verriegelungsteils 8 mit der Ausnehmung 11 in der Fassung 10 der Lampe 1 ersichtlich zu machen. In den Fig. 4a und 4b ist im Vergleich zu den Fig. 5a und 5b auch das Halteteil 12 weggeschnitten, um den Blick auf das Steuerteil des Verriegelungsteils 8 sowie dessen Zusammenspiel mit der Ausnehmung 11 in der Fassung 10 der Lampe ersichtlich zu machen. In Fig. 4a ist nun zu erkennen, dass das Steuerteil 17 als schräge Drahtlasche am, aufgrund der Schnittführung nur noch rudimentär erkennbaren, Verriegelungsteil 8 ausgebildet ist, und in die Ausnehmung 11 in der Fassung 10 der Lampe 1 eingreift. Bei einem Verdrehen der Lampe 1 im Uhrzeigersinn läuft die Schräge des Steuerteils 17 auf die Ausnehmung 11 auf, wodurch das Verriegelungsteil 8 beim Verdrehen sukzessive in Richtung des Pfeils 18 gedrückt wird.

In Fig. 5a ist nun zu erkennen, dass die Ausnehmung 11 der Fassung 10 der Lampe 1 nicht nur mit dem Steuerteil 17, sondern auch mit dem Halteteil 12 beim Einsetzen in Deckung gebracht wird und dass das Halteteil 12 beim Verdrehen die Fassung 10 hintergreift. Während also die Verschiebewirkung des Steuerteils 17 zu einem Verriegeln des Verriegelungsteils 8 mit einem zwischen Fassung 10 und Starter 3 der Lampe 1 ausgebildeten Verriegelungsbereichs bewirkt, der im Wesentlichen gegenüber dem Steuerteil 17 und dem Verriegelungsteil 12 liegt, sorgt die Wirkung des Halteteils 12 für eine zusätzliche Verriegelung, so dass die Lampe 1 zuverlässig festgehalten wird. Es ist zu beachten, dass der Schnitt in den Fig. 5a und 5b ein wenig höher liegt als in den Fig. 4a und 4b, nämlich oberhalb des Halteteils 12, so dass in den Darstellungen gemäß den Fig. 5a und 5b nun längere Bereiche der Flanken des Verriegelungsteils 8 zu erkennen sind.

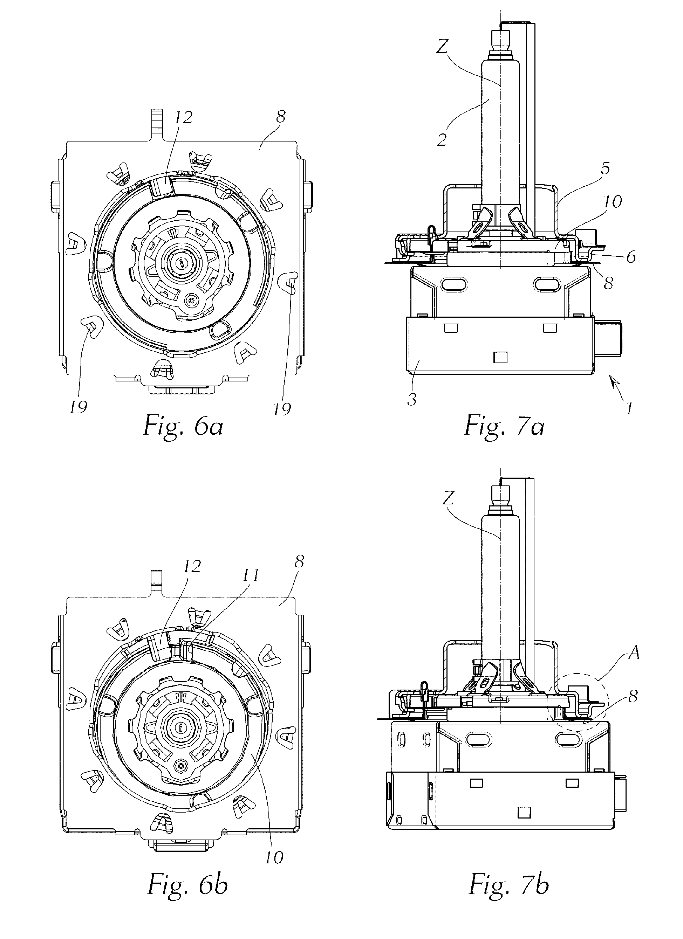

In den Fig. 6a und 6b liegt die Schnittlinie nun noch höher, nämlich oberhalb des Verriegelungsteils 8, so dass zusätzlich die Kontaktlaschen 19 am Verriegelungsteils 8 zu erkennen sind, die eine elektrische Kontaktierung zum in den Fig. 6a und 6b wiederum nicht dargestellten Starter 3 der Lampe 1 herstellen, um eine EMV-Abschirmung zu bewirken. Ebenfalls ist in den Fig. 6a und 6b deutlich zu erkennen, dass aufgrund der Verschiebung des Verriegelungsteils 8 beim Verdrehen der Lampe 1 die Fassung 10 in dem dem Halteteil 12 und dem Steuerteil 17 gegenüberliegenden Bereich vom Verriegelungsteil 8 hintergriffen wird und gleichzeitig das Halteteil 12 in Eingriff mit der Fassung 10 der Lampe 1 steht, so dass eine feste Verriegelung der Lampe 1 durch das Verriegelungsteil 8 realisiert ist.

Der soeben beschriebene Verriegelungsmechanismus ist zur weiteren Verdeutlichung in den seitlichen Schnittdarstellungen gemäß den Fig. 7a und 7b noch einmal dargestellt. Auch hier ist zu erkennen, dass das Verriegelungsteil 8 beim Verriegeln bezüglich der Fassung 10 der Lampe 1 durch Verdrehen quer zur optischen Achse Z des Reflektors verschoben wird, so dass die Fassung 10 nach dem Verdrehen vom Verriegelungsteil 8 hintergriffen wird, wie dies besonders deutlich in Fig. 7b im mit A gekennzeichneten Bereich deutlich wird. Die Bauteile 5 und 6 sind in den Figuren 7a und 7b von einem Adapterteil ausgebildet, das auf einen Reflektor geklemmt werden kann, sie erfüllen jedoch den selben Zweck wie bei den bisher beschriebenen Ausführungsformen.

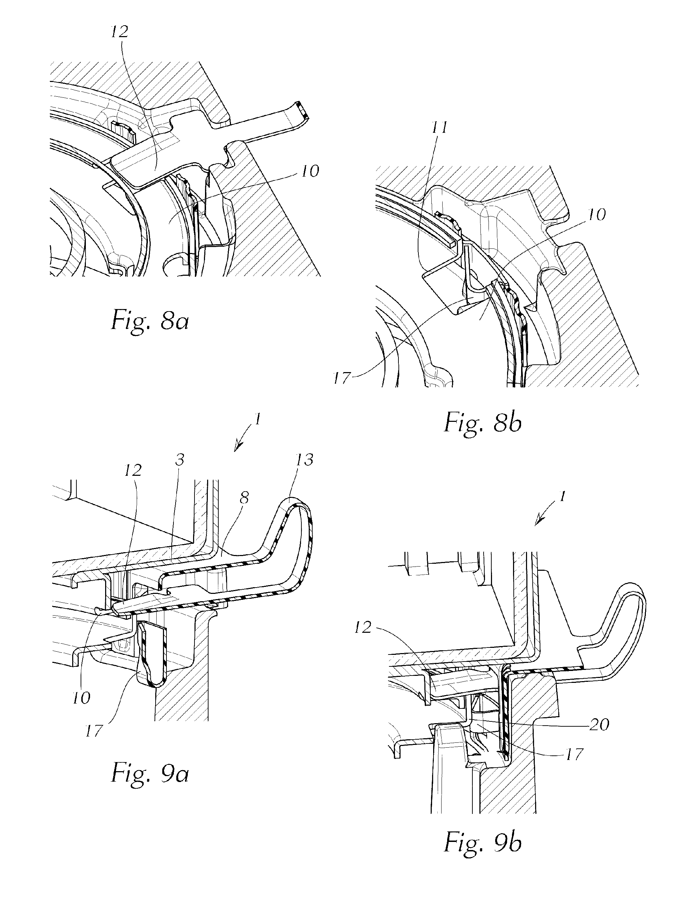

In Fig. 8a und 8b ist zu erkennen, dass beim Einsetzen der Lampe 1 sowohl das Halteteil 12 als auch das Verriegelungsteil 8 mit der Ausnehmung 11 der Fassung 10 in Deckung gebracht werden. Der Zustand aus Fig. 8a ist in einer weiteren Schnittdarstellung in der Fig. 9a dargestellt, wobei in Fig. 9a besonders deutlich wird, dass die Lampe 1 zwischen dem Starter 3 und der Fassung 10 einen Verriegelungsbereich bereitstellt, in den sowohl das Halteteil 12 als auch auf der gegenüberliegenden Seite das Verriegelungsteil 8 eingreifen kann. In Fig. 9a ist weiters zu erkennen, dass das Halteteil 12 über die Drahtlasche 13 einstückig mit dem Verriegelungsteil 8 ausgebildet ist. Das Steuerteil 17 ist in Fig. 9a geschnitten dargestellt. In Fig. 9b ist nun der Zustand nach dem Verdrehen der Lampe 1 dargestellt und es ist zu erkennen, dass das Steuerteil 17, welches nun nicht mehr im Schnitt dargestellt ist, auf die Kante 20 der Ausnehmung 11 aufgelaufen ist, wodurch die Verschiebung des Verriegelungsteils 8 bewirkt wurde.

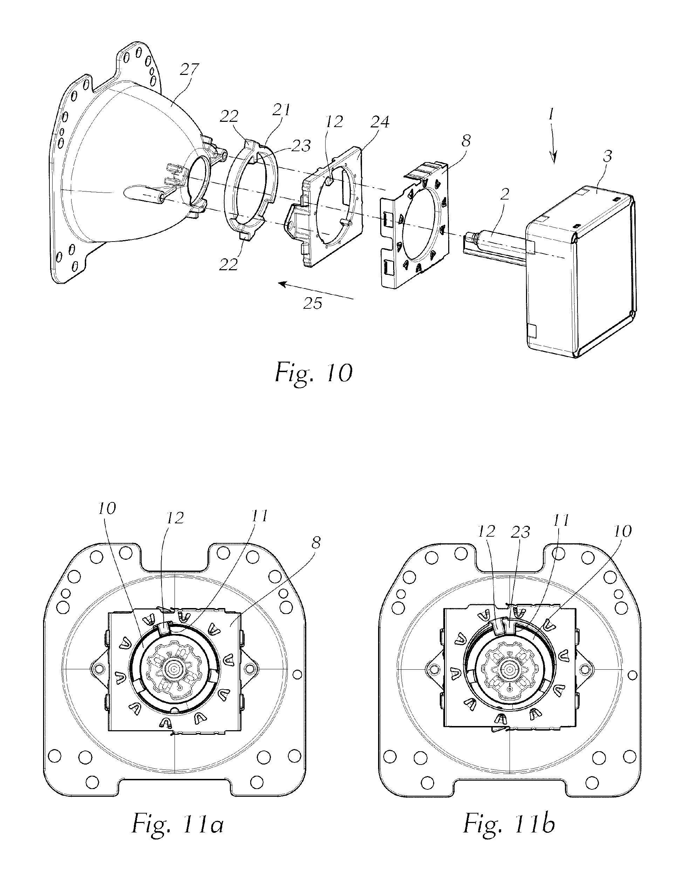

In Fig. 10 ist eine Variante der Erfindung dargestellt, bei der das Steuerteil 21 als vom Verriegelungsteil 8 separater Ring ausgebildet ist. Das Steuerteil 21 weist an seinem Außenumfang eine Steuernase 22 und an seinem Innenumfang einen Mitnehmer 23 auf. Das Steuerteil 21 wird mittels eines Adapterteils 24, an dem das Halteteil 12 ausgeformt ist, mittels Schraubverbindungen am Reflektor 27 festgelegt und das Verriegelungsteil 8, wie bereits bei den vorangehenden Beispielen beschrieben, durch Rastverbindungen auf das Adapterteil 24 aufgesetzt. Die Lampe 1 wird nun wiederum entlang des Pfeils 25 in die Vorrichtung bzw. in den Reflektor eingesetzt und durch Verdrehen festgelegt. Die Verschiebewirkung ist in den Fig. 11a und 11b dargestellt, wobei der Starter 3 der Lampe 1 weggeschnitten ist, um das Zusammenwirken des Steuerteils 21 und des Verriegelungsteils 8 mit der Ausnehmung 11 in der Fassung 10 der Lampe1 ersichtlich zu machen. In Fig. 11a ist hierbei die Situation nach dem Einsetzen der Lampe 1 und vor dem Verdrehen dargestellt ist, in der das Halteteil 12 mit der Ausnehmung 11 an der Fassung 10 in Deckung gebracht ist. Nach dem Verdrehen, wie dies in Fig. 11b zu erkennen ist, wurde der Mitnehmer 23 von der Ausnehmung 11 an der Fassung mitgenommen, wodurch die in Fig. 11b nicht erkennbare Steuernase das Verriegelungsteil quer zur optischen Achse des Reflektors verschoben hat.

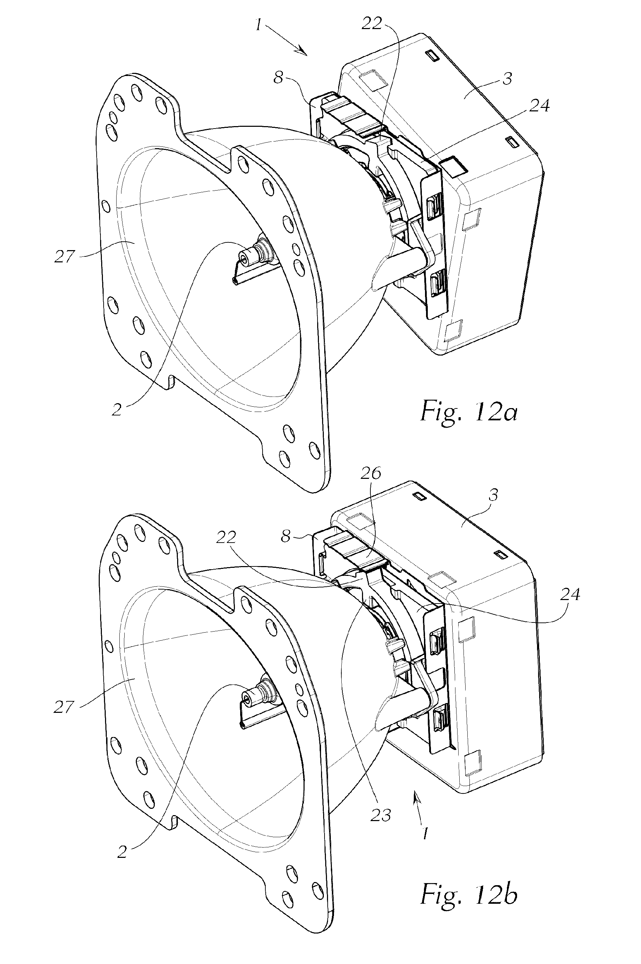

Die Wirkung der Steuernase 22 ist in den Fig. 12a und 12b dargestellt. Wie in Fig. 12a zu erkennen ist, ragt die Steuernase 22 über den Bereich des Adapterteils 24 hinaus und läuft erst beim Verdrehen gemäß Fig. 12b mit ihrer Schräge auf eine Lasche 26 des Verriegelungsteils 8 auf. Dadurch wird das Verriegelungsteil 8 gegenüber dem Adapterteil und somit auch gegenüber der Lampe 1 verschoben, wodurch das Verriegelungsteil 8 in dem in Zusammenhang mit den Fig. 9a und 9b beschriebenen Verriegelungsbereich zwischen der Fassung 10 und dem Starter 3 der Lampe 1 in Wirkverbindung bringbar ist.

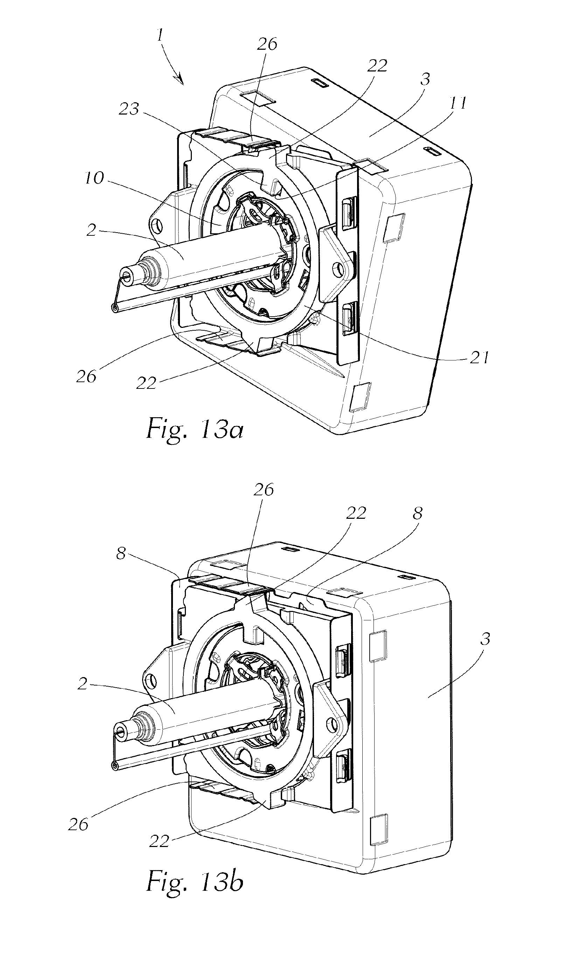

In den Fig. 13a und 13b ist die Situation aus den Fig. 12a und 12b noch einmal dargestellt, wobei der Reflektor 26 zur besseren Übersichtlichkeit weggelassen wurde. Es ist wiederum zu erkennen, dass nach dem Einsetzen der Lampe 1 die Ausnehmung 11 in der Fassung 10 mit dem Mitnehmer 23 des Steuerteils 21 in Eingriff steht, so dass bei einem Verdrehen im Uhrzeigersinn die Steuernasen 22 auf die Laschen 26 des Verriegelungsteils 8 auflaufen und somit die Verschiebung des Verriegelungsteils 8 quer zur optischen Achse des Reflektors bewirken.

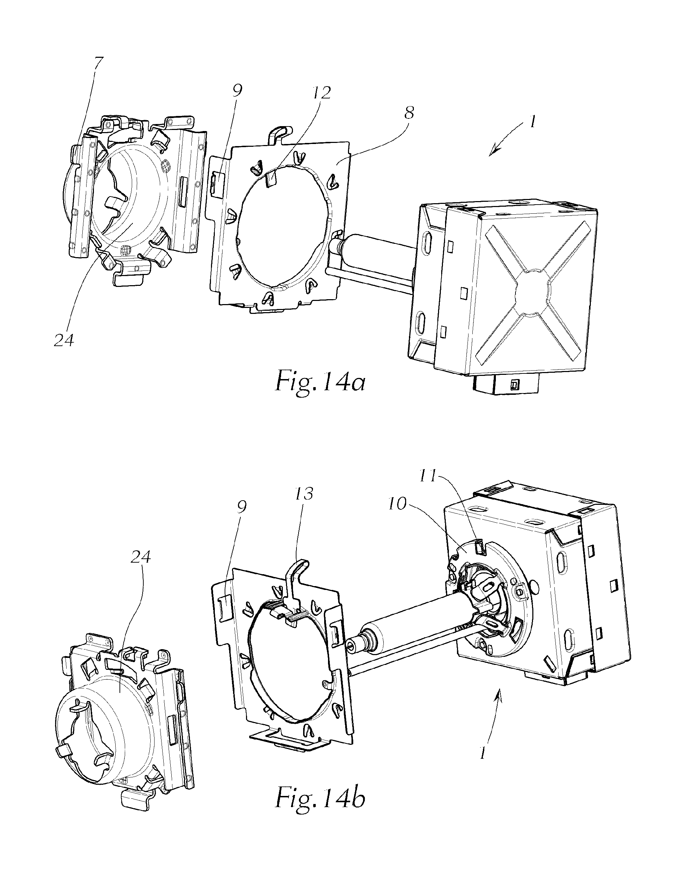

Die Figuren 14a und 14b entsprechen im Wesentlichen den Figuren 1a und 1b und zeigen eine Variante der Erfindung, bei der das Verriegelungsteil 8 nicht direkt am Reflektorhals 5, sondern unter Zwischenschaltung eines Adapterteil 24 festgelegt ist, welches wiederum mit einem nicht dargestellten Reflektorhals, beispielsweise durch Festklemmen verbunden werden kann.

## Patentansprüche

1. Vorrichtung zum Festlegen einer Lampe (1) an einem offenen Reflektorhals (5) eines Reflektors (27) eines Fahrzeugscheinwerfers, **dadurch gekennzeichnet, dass** die Vorrichtung ein am Reflektorhals (5) quer zu einer optischen Achse (Z) des Reflektors verschieblich festgelegtes Verriegelungsteil (8) aufweist, das bei einem Verdrehen der Lampe (1) im Reflektorhals (5) vermittels eines Steuerteils (17) im Sinne einer translatorischen Bewegung relativ zum Reflektorhals (5) verschiebbar und mit zumindest einem Verriegelungsbereich der Lampe (1) in Eingriff bringbar ist.

2. Vorrichtung nach Anspruch 1, **dadurch gekennzeichnet, dass** das Verriegelungsteil (8) unter Zwischenschaltung eines Adapterteils (24) am Reflektorhals (5) festgelegt ist.

3. Vorrichtung nach Anspruch 1, **dadurch gekennzeichnet, dass** das Steuerteil (17) als vom Adapterteil (24) am Reflektorhals (5) gehaltener Ring (21) ausgebildet ist, mit einer am Aussenumfang des Rings (21) gelegenen Steuernase (22) und einem am Innenumfang des Rings (21) gelegenen, mit der Lampe (1) in Eingriff bringbaren Mitnehmer (23).

4. Vorrichtung nach einem der Ansprüche 1, 2 oder 3, **dadurch gekennzeichnet, dass** das Steuerteil (17) am Verriegelungsteil (8) angeordnet und einstückig mit diesem ausgebildet ist.

5. Vorrichtung nach einem der Ansprüche 1 bis 4, **dadurch gekennzeichnet, dass** die Vorrichtung ein bezüglich des Reflektorhalses (5) feststehendes Halteteil (12) aufweist, das beim Verdrehen der Lampe (1) mit dieser in Eingriff bringbar ist.

6. Vorrichtung nach Anspruch 5, **dadurch gekennzeichnet, dass** das Halteteil (12) einstückig mit dem Verriegelungsteil (8) ausgebildet ist und gegen den Reflektorhals (5) bzw. das Adapterteil (24) abgestützt ist.

7. Vorrichtung nach Anspruch 5 oder 6, **dadurch gekennzeichnet, dass** das Halteteil (12) einstückig mit dem Adapterteil (24) ausgebildet ist.

8. Vorrichtung nach einem der Ansprüche 1 bis 7, **dadurch gekennzeichnet, dass** das Verriegelungsteil (8) Rückstellmittel aufweist, die federnd am Reflektorhals (5) bzw. am Adapterteil (24) abgestützt sind.

9. Vorrichtung nach einem der Ansprüche 1 bis 8, **dadurch gekennzeichnet, dass** das Verriegelungsteil (8) aus einem elektrisch leitenden Material gefertigt ist und zur elektrischen Kontaktierung der Lampe (1) ausgeformt ist.
